# EUROPÄISCHE PATENTSCHRIFT

(11) **EP 1 701 044 B1**
(45) Veröffentlichungstag und Bekanntmachung des Hinweises auf die Patenterteilung: **09.04.2008**
(21) Anmeldenummer: 06110311.5
(22) Anmeldetag: 23.02.2006
(51) Int. Cl.: F16B 2/18

(54) **Hebel und Gehäuseanordnung**
Lever and housing arrangement
Levier et disposition de boitier

(30) Priorität: 11.03.2005 DE 102005011351
(43) Veröffentlichungstag der Anmeldung: 13.09.2006
(73) Patentinhaber: VDO Automotive AG, 93055 Regensburg (DE)
(72) Erfinder: Berg, Roman, 35423, Lich (DE); Feith, Sascha, 56479, Rehe (DE); Lauth, Stephan, 35614, Aßlar (DE); Nagel, Thomas, 35796, Gräveneck (DE); Nau, Dieter, 35580, Wetzlar-Nauborn (DE); Schmidt, Karsten, 35745, Herborn-Seelbach (DE); Weigand, Franziska, 35756, Mittenaar (DE); Weimer, Andreas, 35418, Buseck (DE)
(74) Vertreter: Maier, Daniel Oliver

(56) Entgegenhaltungen:
- US-A- 2 094 779

## Beschreibung

Die Erfindung betrifft einen Hebel und eine Gehäuseanordnung mit einem Gehäuse, in dem ein Hebel angeordnet ist. Der Hebel hat einen Hebelgriff und einen Spannkörper, der so ausgebildet ist, dass der Hebel um eine ortsfeste Achse in einer vorgegebenen Drehrichtung gedreht werden kann und dadurch bezogen auf die ortsfeste Achse eine Kraftübertragung sowohl in radialer als auch in axialer Richtung ermöglicht wird.

In der Montagetechnik stellt sich häufig das Problem, dass einzelne Gehäuseteile über aufwendige Schraubverbindungen miteinander verbunden werden. Geräte, die mittels Schraubprozessen montiert werden, weisen insbesondere an den Verbindungsstellen häufig eine aufwendige Konstruktion auf. In diesem Zusammenhang treten zwangsläufig Montagetoleranzen und darüber hinaus durch Schraubprozesse verursachte Metallspäne auf. Diese Metallspäne können in elektrischen Geräten zu elektrischen Kurzschlüssen führen. Ferner führen die Schraubprozesse immer wieder aufgrund von Nachlässigkeiten zu Fehlern, so werden beispielsweise Schrauben im Gerät vergessen.

Aus der US 2,094,779 ist ein Hebel bekannt, der einen Hebelgriff und einen Spannkörper umfasst. Der Hebel ist angeordnet zum Zusammenklemmen zweier Körper.

Die Aufgabe der Erfindung ist es, einen Hebel zu schaffen, der einfach ist und eine Kraftübertragung ermöglicht. Darüber hinaus ist es Aufgabe der Erfindung eine Gehäuseanordnung zu schaffen, die einfach und präzise montiert werden kann.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich gemäß eines ersten Aspektes aus, durch einen Hebel, der einen Hebelgriff und einen Spannkörper umfasst. Der Spannkörper ist so ausgebildet, dass bei Drehung des Hebels um eine ortsfeste Achse in vorgegebener Richtung eine an dem Spannkörper ausgebildete und bezogen auf die Achse radial außen liegende Fläche einen ersten Abstand zwischen einer der außen liegenden Fläche ortsfest zugeordneten Ebene und der Achse bei zunehmender Drehung vergrößert. Dadurch kann ein Anpressdruck auf einen dem Spannkörper radial zugeordneten Körper ausgeübt werden. Ferner ist der Spannkörper so ausgebildet, dass bei Drehung des Hebels um die ortsfeste Achse in vorgegebener Richtung eine an einem ersten axialen freien Ende des Spannkörpers ausgebildete Kontur so ausgebildet ist, dass sie in der vorgegebenen Drehrichtung in ein erstes Element, das geeignet ausgebildet ist, eingreift, dieses mitnimmt und sich der Abstand des ersten Elements bezogen auf die Achse verändert.

Die Ausbildung des Spannkörpers mit einer bezogen auf eine Achse des Spannkörpers radial außen liegenden, exzentrische Fläche hat den Vorteil, dass ein erster Abstand zwischen einer der außen liegenden Fläche ortfest zugeordneten Ebene und der Achse bei zunehmender Drehung vergrößert wird. Dadurch kann über die Drehbewegung des Hebels eine Kraft auf einen der radial außen liegenden Fläche zugeordneten Körper ausgeübt werden. Der Anpressdruck kann dabei über die Exzentrizität bestimmt wird. Die Exzentrizität des Spannkörpers kann zum einen dadurch erreicht werden, dass der Spannkörper selbst exzentrisch ausgebildet ist. Zum anderen kann dies erreicht werden, indem der Spannkörper einen kreisförmigen Querschnitt aufweist und die Achse exzentrisch angeordnet ist, wobei die Achse die Drehachse ist. Bei Drehung des Hebels um die ortsfeste Achse in einer vorgegebenen Richtung wird so ein Anpressdruck auf einen dem Spannkörper radial zugeordneten Körper ausgeübt. Dies ist besonders vorteilhaft in Bezug auf in Gehäusen zu montierende Leiterplatten, die regelmäßig auf einen Untergrund montiert beziehungsweise auf einen Untergrund befestigt werden müssen. Durch die Umsetzung der Drehkraft in einen Anpressdruck auf einen Körper, können Montageprozesse, insbesondere Schraubprozesse vermieden werden.

Die Ausbildung einer Kontur an einem ersten axialen freien Ende an dem Spannkörper hat den Vorteil, dass eine entsprechend ausgebildete Kontur in ein entsprechend ausgebildetes erstes Element eingreifen kann und dieses bezogen auf die Position der Achse mitnehmen kann. Dies ist besonders vorteilhaft im Hinblick auf eine Gehäusemontage, da hier beispielsweise eine Frontplatte von der Kontur so erfasst werden kann, dass sie zu einer entsprechend ausgebildeten Seitenwand und Bodenplatte eines Gehäuses gezogen und vorgespannt werden kann. Die Ausbildung der Kontur ermöglicht es daher, die Drehbewegung des Hebels in eine Mitnahmebewegung umzusetzen und eine Spannkraft auf das mitgenommene Bauteil auszuüben.

In einer vorteilhaften Ausgestaltung des Hebels ist an einem zweiten axialen Ende des Spannkörpers mindestens eine Führungsbahn für ein Eingriffselement eines zweiten Elements so ausgebildet, dass sich der Spannkörper bei zunehmender Drehung in der vorgegebenen Drehrichtung relativ zu dem zweiten Element in Bezug zu der Achse bewegt. Die Ausbildung mindestens einer Führungsbahn für ein Eingriffselement eines zweiten Elements an einem zweiten axialen Ende des Spannkörpers hat den Vorteil, dass so die Drehbewegung des Hebels in eine axiale Bewegung des Hebels umgesetzt werden kann. Diese Umsetzung ermöglicht insbesondere eine Kraftübertragung auf einen ersten Körper, um diesen gegen einen zweiten Körper vorzuspannen. Dies ist besonders vorteilhaft im Bereich des Gehäusebaus und der Gehäusemontage. Hier werden insbesondere so genannte Klemmverbindungen bevorzugt eingesetzt, um Schraubprozesse zu vermeiden.

In einer weiteren vorteilhaften Ausgestaltung des Hebels sind in dem Spannkörper an dem zweiten axialen Ende zwei Führungsbahnen ausgebildet und das zweite Element greift auf die zwei Führungsbahnen gleichzeitig ein. Dies hat den Vorteil, dass über die zwei in dem zweiten Element ausgebildeten Eingriffselemente insbesondere eine axiale Kraft auf den Spannkörper ausgeübt und der Spannkörper geführt wird. Dadurch wird eine statisch bestimmte Führung des Hebels gewährleistet und ein Verklemmen des Hebels vermieden.

In einer weiteren vorteilhaften Ausgestaltung des Hebels sind an dem zweiten axialen Ende des Spannkörpers zwei Führungsbahnen für das Eingriffselement so ausgebildet, dass sich der Spannkörper in der vorgegebenen und entgegen der vorgegebenen Drehrichtung, ausgehend von einer Bezugsstellung, bei zunehmender Drehung relativ zu dem zweiten Element in Bezug zu der Achse bewegt. Dadurch vergrößert sich ein zweiter Abstand zwischen dem Spannkörper und einer dem zweiten axialen Ende zugeordneten zweiten axialen Ebene. Dies hat den Vorteil, dass sich der Hebel in der vorgegebenen und auch entgegen der vorgegebenen Drehrichtung in die gleiche axiale Richtung bewegt.

In einer weiteren vorteilhaften Ausgestaltung des Hebels sind an dem Spannkörper an dem zweiten axialen Ende Führungsbahnen für zwei oder mehr Eingriffselemente ausgebildet. Dies hat den Vorteil, dass je Führungsbahn mindestens ein Eingriffselement ausgebildet wird, wodurch eine optimale Übertragung der Drehbewegung in eine Kraftübertragung ermöglicht wird.

In einer weiteren vorteilhaften Ausgestaltung des Hebels weist der Spannkörper einen kreisförmigen Querschnitt auf und die Achse ist exzentrisch angeordnet. Dies hat den Vorteil, dass durch die exzentrische Anordnung der Achse auf einfache und günstige Weise ein exzentrischer Spannkörper gefertigt werden kann.

In einer weiteren vorteilhaften Ausgestaltung des Hebels ist der Spannkörper exzentrisch ausgebildet. Dies hat den Vorteil, dass die Exzentrität und damit verbunden der Anpressdruck genau und in Bezug auf die jeweiligen Anforderungen abgestimmt werden kann.

In einer weiteren vorteilhaften Ausgestaltung des Hebels ist die mindestens erste Führungsbahn als Gerade ausgebildet und schließt mit dem zweiten axialen Ende des Spannkörpers einen Winkel ein. Dies hat den Vorteil, dass die Geometrie der mindestens ersten Führungsbahn einfach und günstig gefertigt werden kann. Darüber hinaus kann über die Wahl des Winkels und somit der Steigung der Geraden die axiale Bewegung des Spannkörpers und die Größe der gewünschten Kraftübertragung beeinflusst werden. Ferner kann über den Winkel erreicht werden, dass ab einem bestimmten Drehwinkel des Hebels eine Selbsthemmung des Spannkörpers eintritt. Unter Selbsthemmung versteht man, dass die Flächenpressung zwischen dem Eingriffselement des zweiten Elements und der Führungsbahn so groß ist, dass sich der Hebel aus dieser Position ohne zusätzliche Kraftzufuhr nicht bewegt.

In einer weiteren vorteilhaften Ausgestaltung des Hebels ist die mindestens erste Führungsbahn als Kurve ausgebildet. Dies hat den Vorteil, dass die Geometrie der ersten Führungsbahn so gewählt werden kann, dass in der ersten Phase der Drehbewegung des Hebels eine geringe axiale Bewegung erzielt wird und erst bei fortschreitender Drehung des Hebels eine maximal mögliche axiale Bewegung erzielt wird. Dies ist besonders vorteilhaft im Bereich der Gehäusemontage, da hier erst Elemente zueinander geführt werden können, um sie dann zu verspannen.

In einer weiteren vorteilhaften Ausgestaltung des Hebels mündet die mindestens eine Führungsbahn in der vorgegebenen Drehrichtung in einer ersten Mulde. Dies hat den Vorteil, dass die mindestens eine Führungsbahn nicht so ausgelegt werden muss, dass Selbsthemmung eintritt. Vielmehr greift das mindestens eine Eingriffselement des zweiten Elements in die erste Mulde ein und arretiert den Hebel in der gewünschten Position.

In einer weiteren vorteilhaften Ausgestaltung der Düsenbaugruppe wird der Hebel aus glasfaserverstärktem Kunststoff gefertigt. Dies hat den Vorteil, dass der Hebel einfach und günstig zu fertigen ist. Darüber hinaus weist der Hebel dadurch materialspezifische Vorteile auf, wie beispielsweise ein geringes Gewicht. Insbesondere entstehen bei der Gehäusemontage keine Metallspäne.

In einer weiteren vorteilhaften Ausgestaltung des Hebels weist der Spannkörper im Bereich der Achse eine erste Ausnehmung auf. Dies hat den Vorteil, dass der Hebel über die Ausnehmung geführt werden kann, und die Achse so einfach und günstig ortsfest ausgebildet werden kann.

In einer weiteren vorteilhaften Ausgestaltung des Hebels ist in dem Spannkörper eine zweite Ausnehmung ausgebildet, die mit der ersten Ausnehmung kommuniziert. Dies hat den Vorteil, dass ein Eingriffselement über die zweite Ausnehmung so angebracht werden kann, dass es auf eine im Eingriffselement zugeordnete Führungsbahn eingreift.

Die Erfindung zeichnet sich gemäß einem zweiten Aspekt durch eine Gehäuseanordnung aus, die eine Frontplatte mit einem ersten Element umfasst. Ferner umfasst die Gehäuseanordnung eine Seitenwand, die mit einer Bodenplatte gekoppelt ist und in der ein zweites Element angeordnet ist. Darüber hinaus umfasst die Gehäuseanordnung einen Hebel, der auf dem zweiten Element aufgesteckt ist, von diesem geführt ist, wobei die Kontur des Spannkörpers des Hebels in das erste Element eingreift und mitnimmt. Dies hat den Vorteil, dass durch die Drehung des Hebels in einer vorgegebenen Drehrichtung zum einen die Frontplatte an die Seitenwand herangeführt wird, die Lasche an die Seitenwand herangedrückt wird und eine Kraft auf die Bodenplatte ausgeübt wird. Der Hebel entfaltet eine dreifache Wirkung. Dadurch wird eine schnellere und einfachere Montage und Demontage ermöglicht. Ferner sind weniger Montagevorgänge notwendig. Darüber hinaus entsteht keine Spanbildung während der Montage, weshalb die Gefahr von Kurzschlüssen, verursacht durch Späne, vermieden wird.

In einer vorteilhaften Ausgestaltung der Gehäuseanordnung ist in der Seitenwand eine Verrastung ausgebildet, in der der Hebel arretiert werden kann. Dies hat den Vorteil, dass die mindestens eine Führungsbahn des Hebels nicht so ausgelegt werden muss, dass Selbsthemmung eintritt. Ferner muss nicht zwingend eine Mulde im Bereich des Spannkörpers ausgebildet werden. Vielmehr wird der Hebel am Ende der Drehbewegung der Verrastung arretiert.

In einer weiteren vorteilhaften Ausgestaltung der Gehäuseanordnung ist auf der Bodenplatte eine Leiterplatte montiert, auf die der Hebel in radialer Richtung Kraft ausübt. Dies hat den Vorteil, dass die Leiterplatte im Bereich des Hebels nicht über eine Schraubverbindung mit der Bodenplatte verbunden werden muss. Der Hebel ermöglicht eine einfache und günstige Montage der Leiterplatte, da die Bodenplatte einfacher konstruiert werden kann und weniger Bauteile eingesetzt werden müssen.

Ausführungsbeispiele der Erfindung sind im Folgenden anhand der schematischen Zeichnungen erläutert. Es zeigen:
- Figur 1: eine Gehäuseanordnung und einen Hebel,
- Figur 2 u. 3: eine erste Ansicht des Hebels,
- Figur 4 u. 5: eine zweite Ansicht des Hebels, und
- Figur 6: eine dritte Ansicht des Hebels.

Elemente gleicher Konstruktion oder Funktion sind figurenübergreifend mit den gleichen Bezugszeichen gekennzeichnet.

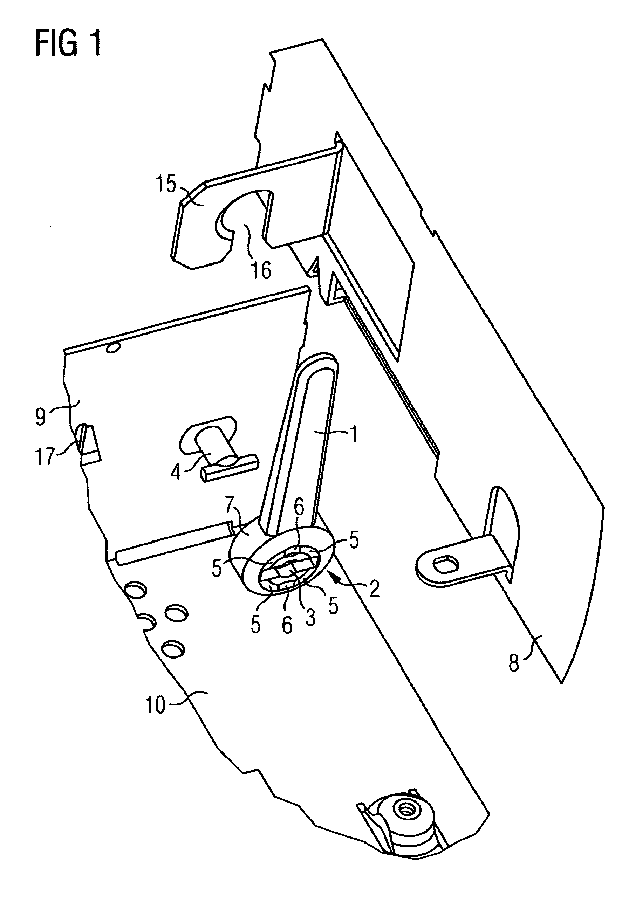

Figur 1 zeigt eine Gehäuseanordnung, die eine Frontplatte 8, eine Bodenplatte 10 und eine Seitenwand 9 umfasst. In der Frontplatte 8 ist ein erstes Element in Form einer Lasche 15 mit einer Laschenausnehmung 16 ausgebildet. Die Seitenwand 9 ist mit der Bodenplatte 10 gekoppelt. In der Seitenwand 9 ist ein zweites Element in Form eines Formbolzens 4 angeordnet.

An dem Formbolzen 4 sind zwei Eingriffselemente in Form der jeweiligen Enden eines weiteren Bolzens ausgebildet. Die Frontplatte 8 wird in der Seitenwand 9 in dem dort angeordneten Formbolzen 4 so eingehängt, dass der Formbolzen in die Laschenausnehmung 16 eingreift.

Der Hebel 1 weist eine Achse A, eine bezogen auf die Achse A radial außen liegende Fläche 7, eine erste Ausnehmung 3 und eine zweite Ausnehmung 14, vier Führungsbahnen 5 sowie eine Kontur 11 auf. Der Hebel 1 wird über die erste Ausnehmung 3 und die zweite Ausnehmung 14 auf den Formbolzen 4 so gesteckt, dass die Kontur 11 in die Laschenausnehmung 16 eingreift. Bei Drehung des Hebels in einer vorgegebenen Drehrichtung fährt die Kontur 11 an der Ausnehmung 16 entlang, ergreift die Lasche und zieht die Frontplatte an die Seitenwand und die Bodenplatte. Bei zunehmender Drehung spannt der Hebel 1 die Lasche 15 an die Seitenwand 9 vor, indem die zwei Eingriffselemente in zwei Führungsbahnen 5 eingreifen und an diesen entlang fahren. Am Ende der Drehbewegung greift das Eingriffselement in die Mulde 6 ein und arretiert den Hebel in der Endposition. Alternativ dazu kann der Hebel in einer Verrastung 17, die in der Seitenwand ausgebildet ist, arretiert werden. Alternativ dazu kann der Hebel 1 ohne die Mulde 6 ausgebildet sein, wobei die Führungsbahnen so ausgebildet sind, dass in der Endposition des Hebels eine Selbsthemmung zwischen Eingriffselement und Führungsbahn eintritt und der Hebel sich vorspannt.

Auf der Bodenplatte 10 kann in einer alternativen Ausführungsform eine Leiterplatte montiert werden, indem der Hebel 1 in der Endposition der Drehbewegung über die bezogen auf die Achse A radial außen liegende Spannfläche 7 einen Anpressdruck auf die Leiterplatte ausübt. In diesem Fall weist der Hebel eine dreifache Wirkung auf, denn die Kontur zieht das Frontplatte 8 an die Seitenwand und die Bodenplatte heran, die Lasche wird an die Seitenwand vorgespannt und die außen liegende Spannfläche 7 des Spannkörpers 2 drückt die Leiterplatte an die Bodenplatte heran und befestigt die Leiterplatte.

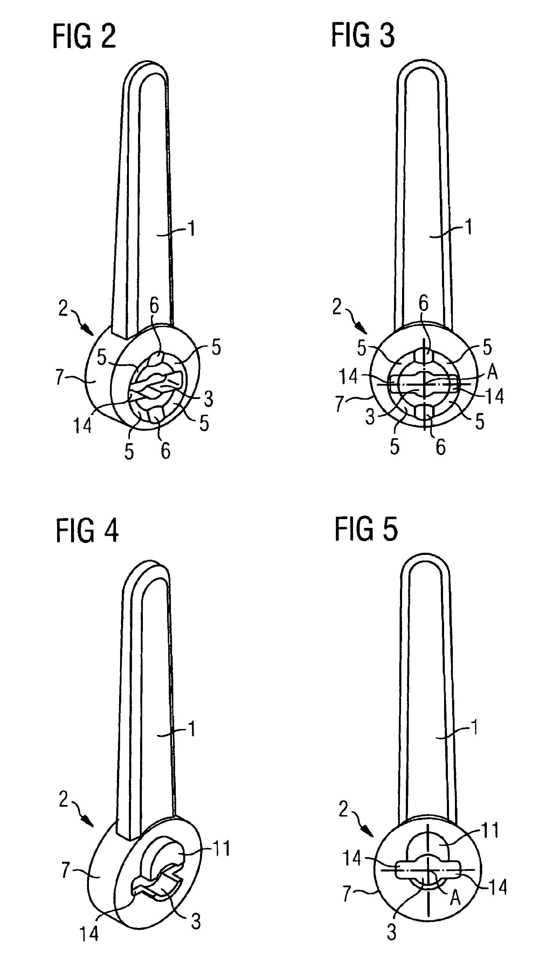

In Figur 2 und 3 ist der Hebel 1 in einer ersten Ansicht dargestellt. Dabei ist der Hebel in Figur 2 dreidimensional und in Figur 3 in Form einer ersten Draufsicht dargestellt. Der Hebel 1 weist einen Hebelgriff 1 und einen Spannkörper 2 auf. In dem Spannkörper 2 sind vier Führungsbahnen 5 und zwei Mulden 6 ausgebildet. Die zwei Mulden 6 sind jeweils am Ende der Führungsbahn so angeordnet, dass das mindestens eine Eingriffselement am Ende der vorgegebenen Drehbewegung in die Mulden 6 eingreift. Ferner sind in dem Hebel eine erste Ausnehmung 3 und eine zweite Ausnehmung 14 ausgebildet. Die erste Ausnehmung 3 ist bevorzugt kreisförmig ausgebildet und die zweite Ausnehmung ist bevorzugt langlochförmig ausgebildet. Die Führungsbahnen 5 beginnen jeweils an der zweiten Ausnehmung, und enden in der Mulde 6. Ferner weist der Spannkörper 2 die Achse A auf, die ortsfest ausgebildet ist und bevorzugt mit der Achse der ersten Ausnehmung deckungsgleich ausgebildet ist.

An dem Spannkörper 2 ist ferner bezogen auf die Achse A die radial außen liegende Fläche 7 ausgebildet. Dabei ist in einer bevorzugten Ausführungsform die Achse A so gewählt, dass sie exzentrisch einem kreisförmigen Querschnitt des Spannkörpers A liegt. In einer alternativen Ausführungsformen kann der Spannkörper selbst exzentrisch ausgebildet sein.

In Figur 4 ist der Hebel dreidimensional und in Figur 5 in einer zweiten Draufsicht dargestellt. Am Spannkörper 2 ist eine Kontur 11 so ausgebildet, dass sie in die Laschenausnehmung 16 der Lasche 15 der Frontplatte 8 eingreifen kann. Die Kontur 11 kann dabei als Erhebung oder auch als Vertiefung ausgeführt werden. Ferner kann die Kontur 11 beispielsweise als zylindrischer Körper, als Kugelausschnitt oder oval ausgebildet werden. Zusätzlich kann die Kontur 11 mit einer Phase versehen werden, um einen besseren Kraftübergang zwischen der Kontur 11 und der Laschenausnehmung 16 zu erreichen. Die Kontur 11 ist bevorzugt so anzuordnen, dass sie während der Drehbewegung des Hebels eine Kurve beschreibt und dadurch eine exzentrische Wirkung durch die Kontur 11 erzielt wird.

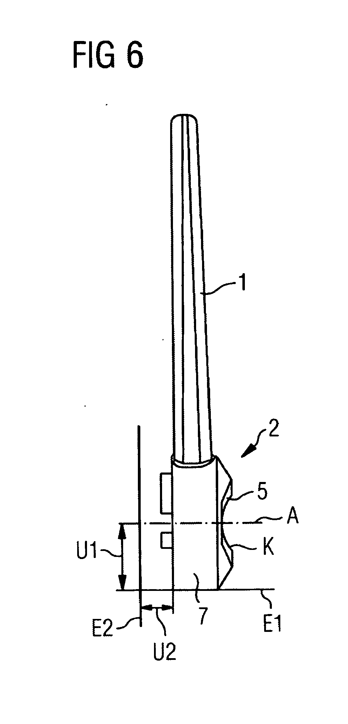

Figur 6 zeigt den Hebel in einer Seitenansicht. Der an dem Spannkörper ausgebildeten und bezogen auf die Achse A radial außen liegende Fläche ist eine ortsfeste Ebene E1 zugeordnet. Ein Abstand U1 zwischen der der außen liegenden Fläche 7 ortsfesten zugeordneten Ebene E1 und der Achse A vergrößert sich bei zunehmender Drehung in vorgegebener Drehrichtung durch die Exzentrizität des Spannkörpers 2.

Dem zweiten axialen Ende des Spannkörpers 2 ist eine zweite axiale Ebene E2 zugeordnet. Der Spannkörper bewegt sich, ausgehend von einer Bezugsstellung bei zunehmender Drehung in der vorgegebenen oder entgegen der vorgegebenen Drehrichtung relativ zu dem zweiten Element in Bezug zu der Achse A. Dabei vergrößert sich ein zweiter Abstand U2 zwischen dem Spannkörper 2 und der zweiten axialen Ebene E2.

Ferner sind in dem Spannkörper 2 die Führungsbahnen 5 in Form einer Kurve ausgebildet. Die Kurve K kann an die jeweiligen Anforderungen so angepasst werden, dass eine optimale Kraftübertragung zwischen dem Hebel und einem zugeordneten Körper erfolgen kann. Alternativ kann die mindestens eine Führungsbahn 5 auch als Gerade ausgebildet sein, die mit dem zweiten axialen Ende des Spannkörpers 2 einen Winkel einschließt. Dieser Winkel ist größer als 0° zu wählen und liegt bevorzugt im Bereich von 10° bis 30°.

Der Hebel ist bevorzugt aus glasfaserverstärktem Kunststoff gefertigt. Andere, auf den speziellen Anwendungsfall abgestimmte Materialien sind in alternativen Ausführungsformen möglich.

## Patentansprüche

1. Hebel, der einen Hebelgriff (1) und einen Spannkörper (2) umfasst,
**dadurch gekennzeichnet, dass**
der Spannkörper (2) so ausgebildet ist, dass bei Drehung des Hebels um eine ortsfeste Achse (A) in vorgegebener Drehrichtung
- eine an dem Spannkörper (2) ausgebildete und bezogen auf die Achse (A) radial außen liegende Fläche (7) einen ersten Abstand (U1) zwischen einer der außen liegenden Fläche (7) ortsfest zugeordneten Ebene (E1) und der Achse (A) bei zunehmender Drehung vergrößert, und so ein Anpressdruck auf einen dem Spannkörper (2) radial zugeordneten Körper ausgeübt werden kann,
- eine an einem ersten axialen freien Ende des Spannkörpers (2) ausgebildete Kontur (11) so ausgebildet ist, dass sie in der vorgegebenen Drehrichtung in ein erstes Element (15) eingreift, dieses mitnimmt und sich der Abstand des ersten Elements (15) bezogen auf die Achse (A) verändert.

2. Hebel nach Anspruch 1, bei dem an einem zweiten axialen Ende des Spannkörpers (2) mindestens eine Führungsbahn (5) für ein Eingriffselement eines zweiten Elements so ausgebildet ist, dass sich der Spannkörper (2) bei zunehmender Drehung in der vorgegebenen Drehrichtung relativ zu dem zweiten Element in Bezug zu der Achse (A) bewegt.

3. Hebel nach Anspruch 2, bei dem in dem Spannkörper (2) an dem zweiten axialen Ende zwei Führungsbahnen (5) ausgebildet sind und das zweite Element (4) auf die zwei Führungsbahnen (5) gleichzeitig eingreift.

4. Hebel nach Anspruch 2, bei dem an dem zweiten axialen Ende des Spannkörpers (2) zwei Führungsbahnen (5) für das Eingriffselement so ausgebildet sind, dass sich der Spannkörper in der vorgegebenen und entgegen der vorgegebenen Drehrichtrichtung, ausgehend von einer Bezugsstellung bei zunehmender Drehung relativ zu dem zweiten Element in Bezug zu der Achse (A) bewegt und einen zweiten Abstand (U2) zwischen dem Spannkörper (2) und einer dem zweiten axialen Ende zugeordneten zweiten axialen Ebene (E2) vergrößert.

5. Hebel nach Anspruch 2 bis 4, bei dem an dem Spannkörper (2) an dem zweiten axialen Ende Führungsbahnen (5) für zwei oder mehr Eingriffselemente ausgebildet sind.

6. Hebel nach einem der vorstehenden Ansprüche, bei dem der Spannkörper (2) einen kreisförmigen Querschnitt aufweist, und die Achse (A) exzentrisch angeordnet ist.

7. Hebel nach Anspruch 1, bei dem der Spannkörper (2) exzentrisch ausgebildet ist.

8. Hebel nach einem der vorstehenden Ansprüche, bei dem die mindestens erste Führungsbahn (5) als Gerade ausgebildet ist und die Gerade mit dem zweiten axialen Ende des Spannkörpers (2) einen Winkel einschließt.

9. Hebel nach einem der vorstehenden Ansprüche, bei dem die mindestens erste Führungsbahn (5) als Kurve (K) ausgebildet ist.

10. Hebel nach einem der vorstehenden Ansprüche, bei dem die mindestens erste Führungsbahn (5) in der vorgegebenen Drehrichtung in eine erste Mulde (6) mündet.

11. Hebel nach einem der vorstehenden Ansprüche, der aus glasfaserverstärktem Kunststoff gefertigt wird.

12. Hebel nach einem der vorstehenden Ansprüche, der eine erste Ausnehmung (3) im Bereich der Achse (A) aufweist.

13. Hebel nach Anspruch 12, bei dem eine zweite Ausnehmung (14) ausgebildet ist, die mit der ersten Ausnehmung (3) kommuniziert.

14. Gehäuseanordnung, die umfasst,
- eine Frontplatte (8) mit einem ersten Element (15),
- eine Seitenwand (9), die mit einer Bodenplatte (10) gekoppelt ist und in der ein zweites Element (4) angeordnet ist,
- einen Hebel nach einem der vorstehenden Ansprüche, der auf das zweite Element (4) aufgesteckt ist und von diesem geführt ist, wobei die Kontur (11) des Spannkörpers (2) des Hebels in das erste Element (15) eingreift und mitnimmt.

15. Gehäuseanordnung nach Anspruch 14, bei der in der Seitenwand (9) eine Verrastung (17) ausgebildet ist, in der der Hebel arretiert werden kann.

16. Gehäuseanordnung nach einem der Ansprüche 14 oder 15, bei der auf der Bodenplatte (10) eine Leiterplatte montiert ist, auf die der Hebel in radialer Richtung Kraft ausübt.

## Claims

1. Lever, comprising a lever handle (1) and a clamping body (2), **characterized in that** the clamping body (2) is configured such that, when the lever is rotated about a fixed axis (A) in a predefined rotational direction
- a, in relation to the axis (A), radially outer surface (7) configured on the clamping body (2), upon increasing rotation, expands a first distance (U1) between a plane (E1) fixedly assigned to the outer surface (7) and the axis (A), and thus a contact pressure can be applied to a body radially assigned to the clamping body (2),
- a contour configured (11) on a first axial free end of the clamping body (2) is configured such that, in the predefined rotational direction, it engages in a first element (15), transports the latter, and the distance of the first element (15) in relation to the axis (A) changes.

2. Lever according to Claim 1, in which on a second axial end of the clamping body (2) at least one guideway (5) for an engagement element of a second element is configured such that the clamping body (2), upon increasing rotation in the predefined rotational direction, moves relative to the second element in relation to the axis (A).

3. Lever according to Claim 2, in which in the clamping body (2) on the second axial end two guideways (5) are configured, and the second element (4) engages simultaneously on the two guideways (5).

4. Lever according to Claim 2, in which on the second axial end of the clamping body (2) two guideways (5) for the engagement element are configured such that, upon increasing rotation, the clamping body moves in and counter to the predefined rotational direction, starting from a reference setting, relative to the second element in relation to the axis (A) and expands a second distance (U2) between the clamping body (2) and a second axial plane (E2) assigned to the second axial end.

5. Lever according to Claim 2 to 4, in which on the clamping body (2) on the second axial end there are configured guideways (5) for two or more engagement elements.

6. Lever according to one of the preceding claims, in which the clamping body (2) has a circular cross section and the axis (A) is arranged eccentrically.

7. Lever according to Claim 1, in which the clamping body (2) is eccentrically configured.

8. Lever according to one of the preceding claims, in which the at least first guideway (5) is configured as a straight line and the straight line forms an angle with the second axial end of the clamping body (2).

9. Lever according to one of the preceding claims, in which the at least first guideway (5) is configured as a curve (K).

10. Lever according to one of the preceding claims, in which the at least first guideway (5), in the predefined rotational direction, opens out into a first trough (6).

11. Lever according to one of the preceding claims, which is produced from glass-fibre reinforced plastic.

12. Lever according to one of the preceding claims, which has a first recess (3) in the region of the axis (A).

13. Lever according to Claim 12, in which there is configured a second recess (14), which communicates with the first recess (3).

14. Housing arrangement, comprising
- a front plate (8) having a first element (15),
- a side wall (9), which is coupled to a base plate (10) and in which there is disposed a second element (4).
- a lever according to one of the preceding claims, which is mounted on the second element (4) and is guided by the latter, the contour (11) of the clamping body (2) of the lever engaging in and transporting the first element (15).

15. Housing arrangement according to Claim 14, in which in the side wall (9) there is configured a catch (17), in which the lever can be arrested.

16. Housing arrangement according to one of Claims 14 or 15, in which on the base plate (10) there is mounted a printed circuit board, to which the lever applies force in the radial direction.

## Revendications

1. Levier qui comprend une poignée (1) et un corps de serrage (2),
**caractérisé par le fait que**
le corps de serrage (2) est configuré de manière telle que, lors d'une rotation du levier autour d'un axe (A) fixe dans une direction de rotation donnée,
- une surface (7) ménagée sur le corps de serrage (2) et se trouvant radialement à l'extérieur par rapport à l'axe (A) agrandit, au fur et à mesure de la rotation, un premier écartement (U1) entre un plan fixe (E1) correspondant à la surface (7) se trouvant à l'extérieur et l'axe (A) et qu'ainsi une pression peut être exercée sur un corps correspondant radialement au corps de serrage (2),
- un contour (11) ménagé à une première extrémité axiale libre du corps de serrage (2) est configuré de manière telle qu'il s'engrène dans la direction de rotation donnée dans un premier élément (15), entraîne celui-ci et que l'écartement du premier élément (15) par rapport à l'axe (A) varie.

2. Levier selon la revendication 1, où, à une deuxième extrémité axiale du corps de serrage (2), au moins une piste de guidage (5) pour un élément d'engrenage d'un deuxième élément est configurée de manière telle que le corps de serrage (2), lorsque la rotation se poursuit dans la direction de rotation donnée relativement au deuxième élément, se déplace en conservant son rapport avec l'axe (A).

3. Levier selon la revendication 2, où, dans le corps de serrage (2) à la deuxième extrémité axiale, deux pistes de guidage (5) sont ménagées et le deuxième élément (4) s'engrène simultanément sur les deux pistes de guidage (5).

4. Levier selon la revendication 2, où, à la deuxième extrémité axiale du corps de serrage (2), deux pistes de guidage (5) sont ménagées pour l'élément d'engrenage de manière telle que le corps de serrage se déplace dans la direction de rotation donnée et dans le sens contraire à la direction de rotation donnée, en partant d'une position de référence, lorsque la rotation se poursuit relativement au deuxième élément, en conservant son rapport avec l'axe (A) et qu'un deuxième écartement (U2), entre le corps de serrage (2) et un deuxième plan axial (E2) correspondant à la deuxième extrémité axiale, augmente.

5. Levier selon la revendication 2 à 4, où, sur le corps de serrage (2) à la deuxième extrémité axiale, sont ménagées des pistes de guidage (5) pour deux ou plusieurs éléments d'engrenage.

6. Levier selon l'une des revendications précédentes, où le corps de serrage (2) a une section transversale circulaire et l'axe (A) est placé d'une façon excentrique.

7. Levier selon la revendication 1, où le corps de serrage (2) est configuré d'une façon excentrique.

8. Levier selon l'une des revendications précédentes, où la au moins une piste de guidage (5) est rectiligne et forme un angle avec la deuxième extrémité axiale du corps de serrage (2).

9. Levier selon l'une des revendications précédentes, où la au moins une première piste de guidage (5) est configurée en forme de courbe (K).

10. Levier selon l'une des revendications précédentes, où la au moins une première piste de guidage (5) débouche, dans la direction de rotation donnée, dans un premier creux (6).

11. Levier selon l'une des revendications précédentes, qui est fabriqué en matière plastique renforcée par de la fibre de verre.

12. Levier selon l'une des revendications précédentes, qui comporte un premier évidement (3) dans la zone de l'axe (A).

13. Levier selon la revendication 12, où est ménagé un deuxième évidement (14) qui communique avec le premier évidement (3) .

14. Système de boîtier qui comprend
- un panneau avant (8) avec un premier élément (15),
- une paroi latérale (9), qui est couplée avec une plaque de fond (10) et dans laquelle est placé un deuxième élément (4),
- un levier selon l'une des revendications précédentes, qui est enfiché sur le deuxième élément (4) et qui est guidé par celui-ci, où le contour (11) du corps de serrage (2) du levier s'insère dans le premier élément (15) et l'entraîne.

15. Système de boîtier selon la revendication 14, où un enclenchement (17) est ménagé dans la paroi latérale (9) et dans lequel le levier peut être fixé.

16. Système de boîtier selon l'une des revendications 14 ou 15, où, sur la plaque de fond (10), est montée une carte à circuits imprimés sur laquelle le levier exerce une force dans la direction radiale.
